# EUROPÄISCHE PATENTSCHRIFT

(11) **EP 0 912 374 B1**
(45) Veröffentlichungstag und Bekanntmachung des Hinweises auf die Patenterteilung: **28.11.2001**
(21) Anmeldenummer: 97900575.8
(22) Anmeldetag: 08.01.1997
(51) Int. Cl.: B60R 21/045, B60J 5/04, F16L 11/14

(54) **ABSORPTIONSKÖRPER UND KOMBINATION EINES ABSORPTIONSKÖRPERS MIT FAHRZEUGKAROSSERIETEILEN**
ABSORBING BODY AND COMBINATION OF AN ABSORBING BODY AND CAR BODY PARTS
CORPS ABSORBANT ET ASSOCIATION D'UN CORPS ABSORBANT AVEC DES PARTIES DE LA CARROSSERIE D'UN VEHICULE

(30) Priorität: 15.07.1996 JP 18464396
(43) Veröffentlichungstag der Anmeldung: 06.05.1999
(73) Patentinhaber: ALCAN DEUTSCHLAND GMBH, D-37075 Göttingen (DE)
(72) Erfinder: OTSUKA, Kunio, Tokyo 108 (JP)
(74) Vertreter: Füchsle, Klaus, Dipl.-Ing.
(86) Internationale Anmeldenummer: EP9700046
(87) Internationale Veröffentlichungsnummer: WO9802335

(56) Entgegenhaltungen:
- EP-A- 0 561 211
- DE-C- 19 512 525
- US-A- 3 974 467
- US-A- 5 325 893
- AUTOMOTIVE ENGINNERING, Bd. 87, Nr. 4, April 1979, Seite 56 XP002044419

## Beschreibung

### Technisches Gebiet

Die Erfindung betrifft einen Absorptionskörper gemäß dem Oberbegriff des Anspruchs 1 und eine Kombination aus einem Absorptionskörper und Teilen einer Fahrzeugkarosserie.

### Stand der Technik

Ein Absorptionskörper in Form eines flexiblen Rohres gemäß dem Oberbegriff des Anspruchs 1 ist in der DE 195 04 659 A1 beschrieben und dient dem Einbau zwischen zwei Grenzflächen, beispielsweise den Oberflächen von Teilen einer Fahrzeugkarosserie. Bekanntermaßen werden an Fahrzeuge wie Personenkraftwagen und Nutzfahrzeuge besondere Anforderungen hinsichtlich der Sicherheit der Passagiere gestellt. Zur Gewährleistung der Sicherheit ist es bekannt, das verwendete Karosserieblech durch Erhöhung der Dicke des Blechs derart fest auszubilden, daß die Sicherheit von Passagieren im Fall von auf das Fahrzeug wirkenden Kräften erhöht wird. Diese Maßnahme hat jedoch zur Folge, daß das Gewicht der Fahrzeugkarosserie zunimmt, und daß sowohl der Kraftstoffverbrauch des Fahrzeugs als auch die Material- und Herstellungskosten erhöht werden. Somit ist es aus Gründen der Wirtschaftlichkeit nicht ohne weiteres möglich, eine Fahrzeugkarosserie durch Erhöhung der Dicke des verwendeten Blechs so robust zu gestalten, daß die Sicherheit der Passagiere stets gewährleistet ist. Ferner gibt es Zonen an einer Fahrzeugkarosserie, an denen aufgrund der geometrischen Verhältnisse oder aufgrund der übrigen in diesem Bereich vorhandenen Bauteile eine Erhöhung der Blechdicke nicht möglich ist.

Mit dem Absorptionskörper gemäß dem Oberbegriff des Anspruchs 1 wurde ein Bauteil für eine Fahrzeugkarosserie geschaffen, das bei einer vertretbaren Erhöhung des Gewichts der Karosserie die Sicherheit der Insassen beträchtlich erhöht. Der bekannte Absorptionskörper ist durch ein flexibles Rohr mit verrillter Wand und rundem Querschnitt gebildet, das bei der Einwirkung von Stoßenergie auf ein darüberliegendes Bauteil derart verformt wird, daß ein Großteil der Stoßenergie durch die Verformung des rohrförmigen Absorptionskörpers aufgenommen wird. Dadurch gelangt die Stoßenergie in deutlich verringertem Umfang zu den Bauteilen im Innenraum einer Fahrgastzelle, so daß die Sicherheit der Passagiere gewährleistet ist. Das bekannte Absorptionselement kann in Form eines Wellrohres mit mehreren Schichten von Aluminiumblech ausgebildet sein.

In der EP 0 266 084 B1 ist ein aus Plattenelementen aufgebautes Absorptionselement beschrieben, das einen viereckigen, schachtelartigen Querschnitt aufweist, und dessen parallel zur Stoßrichtung verlaufende Plattenteile wellenförmig ausgebildet sind. Ein weiteres Deformationselement ist in der DE 30 38 252 C2 beschrieben. Dieses besteht aus mehreren parallel aneinanderliegenden Rohren, die einschichtig aufgebaute Wände aus Metall oder Kunststoff aufweisen. Ein Wellrohr als Deformationsglied, das im Aufprallbereich der Knie eines Fahrzeuglenkers und eines Beifahrers angeordnet ist und dessen quer zur Stoßrichtung angeordnete Flächen gewellt ausgebildet sein sollen, ist in der DE 26 06 640 C2 beschrieben. Die DE-A1 2 312 202 offenbart ein röhrenförmiges Deformationsglied, das an einem Träger unterhalb des Armaturenbretts eines Kraftfahrzeugs angebracht ist. Schließlich ist in der DE 40 03 952 A1 die Verwendung von sechseckigen Deformationselementen für die Absorption von Energie beschrieben, die auf einen Kniefänger im Falle einer Kollision aufgebracht wird.

Der Erfindung liegt die Aufgabe zugrunde, einen Absorptionskörper für Stoßenergie in Form eines flexiblen Rohres mit verbesserten Absorptions- und Verarbeitungseigenschaften zu schaffen.

### Darstellung der Erfindung

Die Lösung dieser Aufgabe wird durch einen Absorptionskörper gemäß Anspruch 1 erreicht.

Demzufolge ist die Wand des flexiblen Rohres, das den Absorptionskörper bildet, mehrschichtig aufgebaut. Hierbei weist der erfindungsgemäße Absorptionskörper zumindest eine Lage aus Metall und zumindest eine Lage aus Papier oder Kunststoff auf. Ferner ist der Absorptionskörper bezüglich seines Querschnitts derart gestaltet, daß zumindest ein weitgehend gerade verlaufender Wandabschnitt ausgebildet ist, der weitgehend parallel zur Richtung einer zu erwartenden Krafteinleitung ist.

Bei dem erfindungsgemäßen Absorptionskörper gewährleistet insbesondere die Metallschicht, daß dieser Verformungseigenschaften aufweist, die in besonderer Weise für die Aufnahme von Stoßenergie geeignet sind, die im Fall einer Kollision auf Bestandteile einer Fahrzeugkarosserie wirkt. Durch die Verwendung zumindest einer Lage oder Schicht aus geeignetem Papier oder Kunststoff können für das Absorptionselement die vorteilhaften Eigenschaften dieser Werkstoffe für die Herstellung des Absorptionskörpers und seine Anbringung an einem Bauteil genutzt werden.

Durch den zumindest einen, im Querschnitt weitgehend gerade verlaufenden Wandabschnitt kann erfindungsgemäß ein besonders günstiges Verformungsverhalten des Absorptionskörpers erhalten werden. Bei Einwirkung einer Kraft auf den geraden Wandabschnitt, parallel zu dessen Verlauf, erfolgt nämlich schon bei einer vergleichsweise geringen Verformung eine gute Absorption der einwirkenden Energie. Durch diese erfindungsgemäße Maßnahme kann insbesondere ein Absorptionsverhalten erreicht werden, das deutlich günstiger ist als das Absorptionsverhalten von im Stand der Technik bekannten rohrförmigen Absorptionskörpern mit weitgehend rundem Querschnitt. Diese unterliegen bei der Aufnahme der einwirkenden Kräfte einer deutlich umfangreicheren Verformung und sind somit aus Sicherheitsgesichtspunkten ungünstiger.

Bevorzugte Ausführungsformen der Erfindung sind in den weiteren Ansprüchen beschrieben.

Gemäß einer bevorzugten Ausführungsform des erfindungsgemäßen Absorptionskörpers besteht dieser aus einem gerillten Wickelrohr, das zur Ausbildung mehrerer Schichten für die Wände des Rohres aus mehreren Bändern wendelförmig gewickelt ist. Somit werden beim Wickeln des Absorptionskörpers in dieser Ausführungsform die vorgesehenen Materialien für die Metallschichten, beispielsweise Aluminium, Aluminiumlegierungen und Stahl, in Form von Bändern verwendet. Diese werden zusammen mit vorzugsweise darüber und darunter einlaufenden Bändern aus Papier oder Kunststoff zu einem Wickelrohr verarbeitet, das den erfindungsgemäßen Absorptionskörper bildet. Durch die Herstellung des erfindungsgemäßen Absorptionskörpers als gerilltes Wickelrohr kann ein besonders geringer Herstellungsaufwand erreicht werden. Ferner hat es sich als vorteilhaft erwiesen, wenn die an den Wänden des Rohres ausgebildeten Wellenberge und -täler für die Aufnahme der einwirkenden Kräfte genutzt werden. Im Bereich des erfindungsgemäß weitgehend gerade verlaufenden Wandabschnitts ist der Absorptionskörper so ausgerichtet, daß eine einwirkende Kraft parallel zu diesem Wandabschnitt und somit parallel zu der Längserstreckung der an dem Wandabschnitt ausgebildeten Wellenberge und -täler verläuft. Aufgrund der wendelförmigen Wickelung der gerillten Bänder in dieser Ausführungsform des erfindungsgemäßen Absorptionskörpers verlaufen die Wellenberge und -täler wegen des Steigungswinkels der wendelförmigen Wickelung unter einem geringen Winkel zur einwirkenden Kraft. Dennoch erfolgt bei der Einwirkung von Kräften eine Verformung der Wellenberge und -täler, in ihrer Längsrichtung, was für die Aufnahme hoher Kräfte und Energien bei vergleichsweise geringen Verformungen äußerst günstig ist.

In dieser Ausführungsform wird bevorzugt, daß die Bänder mit seitlichen Überlappungen gewickelt werden. Somit stellt sich in dieser Ausführungsform zumindest im Bereich der Überlappungen ein Aufbau des erfindungsgemäßen Absorptionskörpers ein, der beispielsweise im Fall einer einfachen Überlappung aus der doppelten Anzahl der oben genannten Papier-, Kunststoff- und Metallschichten besteht. Sofern also der Absorptionskörper gemäß einer bevorzugten Ausführungsform mit innen- und außenliegender Papier- oder Kunststoffschicht und zwei dazwischenliegenden Metallschichten als Wickelrohr hergestellt wird, weist der Absorptionskörper im Bereich der Überlappungen den genannten Aufbau zweifach übereinanderliegend auf. Durch die gemäß dieser Ausführungsform ausgebildeten Überlappungen kann für den erfindungsgemäßen Absorptionskörper eine besonders gute Festigkeit erreicht werden. Zugleich stellt die Herstellung des Absorptionskörpers als Wickelrohr ein besonders wirtschaftliches Herstellungsverfahren dar.

Für die zumindest eine Metallschicht des erfindungsgemäßen Absorptionskörpers wird bevorzugt, daß diese aus Aluminium, einer Aluminiumlegierung oder Stahl besteht. Für die beiden erstgenannten Werkstoffe kann hierbei in vorteilhafter Weise die geringe Dichte dieser Werkstoffe und das dadurch erreichbare geringe Gewicht für den Absorptionskörper genutzt werden. Insbesondere wird die Sicherheit einer Fahrzeugkarosserie deutlich verbessert, ohne daß eine wesentliche Erhöhung des Karosseriegewichts in Kauf genommen werden muß. Die Verwendung von Stahl für die Metallschicht des erfindungsgemäßen Absorptionskörpers bietet die Vorteile einer hohen Materialfestigkeit und geringer Kosten für diesen Standardwerkstoff.

Gemäß einer bevorzugten Ausführungsform der Erfindung weist der Absorptionskörper sowohl an der Innen- als auch an der Außenseite seiner Wand oder Wände eine Lage aus Papier oder Kunststoff auf. Insbesondere durch die Ausbildung einer Schicht aus den genannten Materialien an der Außenseite des Absorptionskörpers wird für diesen ermöglicht, daß er mittels eines geeigneten Klebstoffs oder eines geeigneten Haftbandes an einem Karosserieteil befestigt werden kann. Wie dies im Fall einer Außenseite aus Metall der Fall ist, kann hierfür selbstverständlich auch in der genannten Ausführungsform ein gewöhnliches Verbindungselement, beispielsweise eine oder mehrere Schrauben, oder auch ein Clip verwendet werden. Die Papierlagen bieten zudem den in vielen Fällen erwünschten Vorteil der Geräuschdämpfung und des Klapperschutzes.

Bevorzugt weist der Absorptionskörper gemäß der Erfindung ferner Schichten aus Metall in einer Anzahl auf, die durch zwei teilbar ist. Im Fall der Ausbildung des Absorptionskörpers in Form eines Wickelrohres, werden also zwei Bänder aus Metall gegebenenfalls mit seitlichen Überlappungen gewickelt. Hierbei können die Materialien der beiden Schichten in beliebiger Kombination aus den Materialien Aluminium, einer Aluminiumlegierung und Stahl gewählt werden können. Folglich können beide Metallschichten des erfindungsgemäßen Absorptionskörpers aus dem gleichen, oben genannten Material bestehen, oder es können die genannten Materialien wahlweise für die innere und die äußere Metallschicht beliebig miteinander kombiniert werden.

Für die Orientierung des weitgehend gerade verlaufenden Wandabschnitts des Absorptionskörpers zu der Richtung der zu erwartenden Krafteinleitung hat es sich als besonders vorteilhaft erwiesen, wenn der Wandabschnitt um nicht mehr als einen Winkel von 15°, vorzugsweise 10° und insbesondere 5°, von der Richtung der zu erwartenden Krafteinleitung abweicht. In dieser Ausrichtung konnten besonders günstige Absorptionseigenschaften festgestellt werden.

Ferner hat es sich für den weitgehend gerade verlaufenden Wandabschnitt als vorteilhaft erwiesen, wenn dieser im Querschnitt gesehen in der Mitte seiner Länge in einem Ausmaß ausgebaucht ist, das nicht mehr als ein Fünftel, bevorzugt nicht mehr als ein Zwanzigstel der Länge des Wandabschnitts beträgt. Bei diesen Werten können die beschriebenen vorteilhaften Effekte bei dem Verformungsverhalten des Absorptionskörpers bezüglich der dabei aufgenommenen Kräfte erhalten werden. Ferner konnten besonders günstige Eigenschaften bei einer Ausbauchung in der Größenordnung von einem Zehntel und einem Fünfzigstel der Länge der Wand festgestellt werden.

Für den erfindungsgemäßen Absorptionskörper haben sich vorteilhafte Eigenschaften ergeben, wenn dieser einen polygonalen Querschnitt aufweist, dessen Ecken wahlweise abgerundet sein können. Dadurch kann der Absorptionskörper hinsichtlich seines Querschnitts in vorteilhafter Weise an das Bauteil oder die Bauteile angepaßt ausgebildet werden, an denen oder zwischen die er anbringbar ist.

Insbesondere ist für den Absorptionskörper die Verwendung eines symmetrischen Querschnitts, beispielsweise eines quadratischen, rechteckigen, rautenförmigen, sechs- oder achteckigen Querschnitts beabsichtigt. Durch die genannten Querschnittsformen kann in besonderer Weise eine vorteilhafte Anpassung der Form des Absorptionskörpers an die umgebenden Bauteile erreicht werden.

Für entsprechende Anwendungsfälle wird ferner bevorzugt, den Querschnitt des Absorptionskörpers unsymmetrisch, beispielsweise dreieckig, trapezförmig oder fünfeckig auszubilden.

Für besondere Anwendungsfälle hat es sich als günstig herausgestellt, wenn wenigstens eine Seite des im Querschnitt polygonal ausgebildeten Absorptionskörpers konkav oder konvex gekrümmt ausgebildet ist. Ferner können in bestimmten Anwendungsfällen besondere Vorteile erreicht werden, wenn die Wand des Absorptionskörpers im Querschnitt derart verläuft, daß sie an zumindest einer Stelle unter Ausbildung eines negativen Winkels nach innen eingeknickt ist (vgl. Fig. 9).

Gemäß einem weiteren Aspekt der Erfindung wird eine Kombination aus einem oben beschriebenen Absorptionskörper mit zumindest einem Bauteil einer Fahrzeugkarosserie vorgestellt. Eine derartige Kombination stellt die bevorzugte beabsichtigte Verwendung des erfindungsgemäßen Absorptionskörpers dar. Als Bauteile einer Fahrzeugkarosserie, zwischen denen der erfindungsgemäße Absorptionskörper anzuordnen ist, werden eine Innen- und eine Außenwand bevorzugt, an oder zwischen denen der Absorptionskörper befestigt ist. Hierdurch wird mittels des erfindungsgemäßen Absorptionskörpers in besonders vorteilhafter Weise eine Erhöhung der Sicherheit von Passagieren eines Fahrzeugs erreicht, indem die auf die Außenwand wirkende Stoßkraft in hohem Ausmaß von dem darunterliegenden Absorptionskörper aufgenommen wird.

Für diese Kombination des erfindungsgemäßen Absorptionskörpers mit zumindest einem Karosseriebauteil wird bevorzugt, daß der Absorptionskörper derart angebracht ist, daß nicht nur sein weitgehend gerade verlaufender Wandabschnitt parallel zur Richtung einer einzuleitenden Kraft verläuft, sondern daß ferner die Rohrlängsachse weitgehend senkrecht zur Richtung der Krafteinleitung verläuft. In dieser Ausrichtung des erfindungsgemäßen Absorptionskörpers beim Einbau in eine Fahrzeugkarosserie können die erfindungsgemäßen Vorteile des Absorptionskörpers am besten genutzt werden.

### Kurzbeschreibung der Zeichnungen

Nachfolgend wird ein in den Zeichnungen dargestelltes Ausführungsbeispiel der Erfindung näher beschrieben. Es zeigen:
- Fig. 1: eine perspektivische Ansicht eines erfindungsgemäßen Absorptionskörpers;
- Fig. 2: eine Vorderansicht des in Fig. 1 dargestellten Absorptionskörpers;
- Fig. 3: eine teilweise Längsschnittansicht des in Fig. 1 dargestellten Absorptionskörpers;
- Fig. 4: die Einzelheit X gemäß Fig. 3;
- Fig. 5A: eine schematische Darstellung der Eigenschaftsprüfung einer Ausführungsform des Absorptionskörpers gemäß der Erfindung;
- Fig. 5B: eine schematische Darstellung der Eigenschaftsprüfung eines Vergleichsbeispiels;
- Fig. 6: eine graphische Darstellung der Ergebnisse der Eigenschaftsprüfung;
- Fig. 7: eine perspektivische Ansicht eines Fahrzeugs mit Andeutung der Stellen, an denen der erfindungsgemäße Absorptionskörper angebracht werden kann;
- Fig. 8: eine perspektivische Ansicht von Teilen einer Fahrzeugkarosserie mit dem erfindungsgemäßen Absorptionskörper; und
- Fig. 9: eine schematische Querschnittsansicht einer besonderen Ausführungsform des Absorptionskörpers.

### Beschreibung einer bevorzugten Ausführungsform der Erfindung

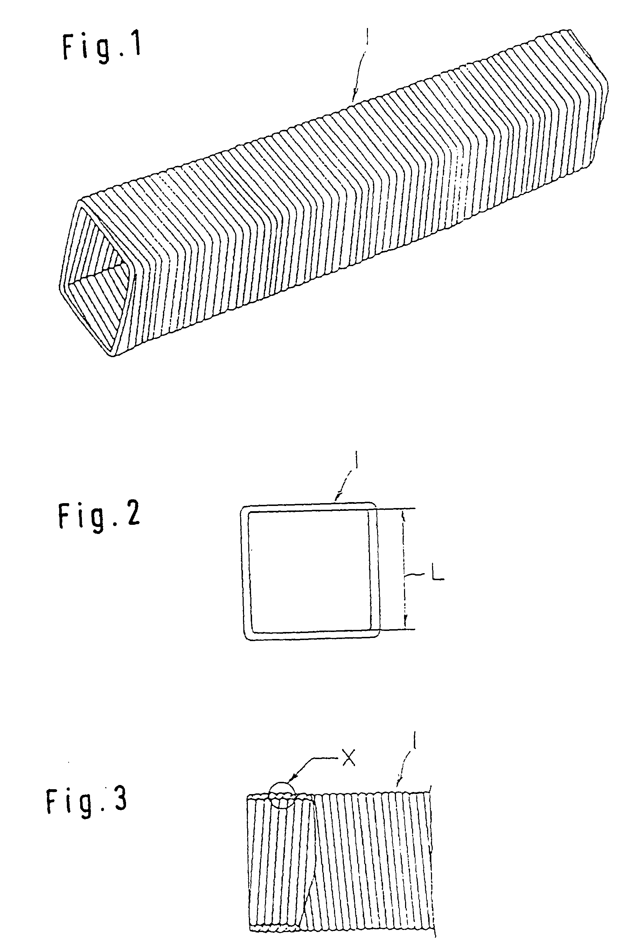

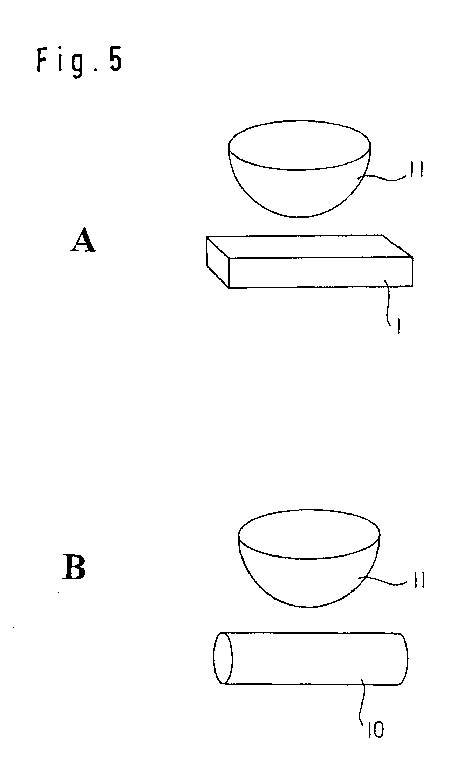

Wie in Fig. 1 zu erkennen ist, wird der erfindungsgemäße Absorptionskörper 1 durch ein längliches, flexibles Rohr mit verrillter Wand gebildet. In dem gezeigten Fall weist das Rohr einen viereckigen, insbesondere quadratischen Querschnitt auf. In der perspektivischen Darstellung von Fig. 1 sind ferner die sowohl an der Außenseite als auch an der Innenseite des Rohres ausgebildeten Rillen zu erkennen, die durch die Herstellung des gezeigten Absorptionskörpers als flexibles Wickelrohr aus gewelltem Bandmaterial entstehen. Diese Struktur wird nachfolgend im einzelnen unter Bezugnahme auf die Fig. 4 beschrieben werden.

In Fig. 2 ist der weitgehend quadratische Querschnitt des dargestellten Absorptionskörpers 1 nochmals gut zu erkennen. Ferner geht aus der dargestellten Vorderansicht die Länge L hervor, die, wie nachfolgend beschrieben, bei der Eigenschaftsprüfung des Absorptionskörpers 1 betrachtet wird.

In der Seitenansicht mit teilweisem Längsschnitt von Fig. 3 ist gut zu sehen, daß die an der Außenseite ausgebildeten Rillen an der Vorderseite des Absorptionskörpers 1 von oben nach unten nach rechts geneigt verlaufen. Diese Form stellt sich aufgrund der wendelförmigen Wicklung des Absorptionskörpers 1 aus gerilltem Bandmaterial ein.

In Fig. 4 ist die Struktur der Wände des Absorptionskörpers 1 im einzelnen zu erkennen. Von außen nach innen besteht die mehrschichtige Wand des Absorptionskörpers 1 aus einer Außenschicht 2, die in dem gezeigten Fall aus Papier, z.B. Kraftpapier, besteht, einer Mittelschicht 3, die aus Metallblech, Eisen- oder Hartaluminiumfolie, besteht, und einer Innenschicht 4, für die wiederum Papier verwendet wird. In axialer Richtung ist die so geschichtete Wand in Wellenform ausgebildet, so daß jeweils abwechselnd hervortretende Stellen 5 und abgesenkte Stellen 6 vorhanden sind. Wie in Verbindung mit den Fig. 1 und 3 deutlich wird, verlaufen sowohl die abgesenkten als auch die hervortretenden Stellen 6, 5 an dem Absorptionskörper wendelförmig. In dem gezeigten Fall weisen die für die Außenschicht 2 und die Innenschicht 4 verwendeten Bänder aus Kraftpapier eine Dicke von ≥ 0,2 mm und eine Breite von ≥ 30 mm auf. Ferner wird die Mittelschicht 3 durch Verwendung eines Metall-Bandes mit einer Dicke von ≥ 0,05 mm und einer Breite von ≥ 30 mm ausgebildet.

In den Fig. 5A und 5B ist schematisch der Versuchsaufbau für die Eigenschaftsprüfung des erfindungsgemäßen Absorptionselement (Fig. 5A) und eines Vergleichsbeispiels mit kreisrundem Querschnitt (Fig. 5B) gezeigt. Während in Fig. 5A der in den Fig. 1 bis 3 dargestellte Absorptionskörper 1 gezeigt ist, wird bei dem Versuchsaufbau gemäß Fig. 5B ein Absorptionskörper 10 mit rundem Querschnitt geprüft. Der Außendurchmesser des Absorptionskörpers 10 stimmt mit der äußeren Seitenlänge des in den Fig. 1 bis 3 gezeigten Absorptionskörpers 1 überein, erfordert also dieselbe Einbauhöhe. Die beiden Absorptionskörper 1, 10 sind hinsichtlich der axialen Länge, der Dicke der Materialschichten und des Abstandes sowie der Anzahl der Windungen der Wendelung gleich ausgebildet.

Im Rahmen der Eigenschaftsprüfung wird auf die beiden Absorptionskörper 1, 10 mittels einer Druckvorrichtung mit einer Halbkugel 11 mit einem Durchmesser von 165 mm ein Druck ausgeübt. Die dabei auftretende Veränderung des Innenmaßes L (vgl. Fig. 2) wird gemessen. Die Halbkugel 11 wird mit einer Geschwindigkeit von 50 mm/min oder 100 mm/min mit zunehmender Kraft verfahren.

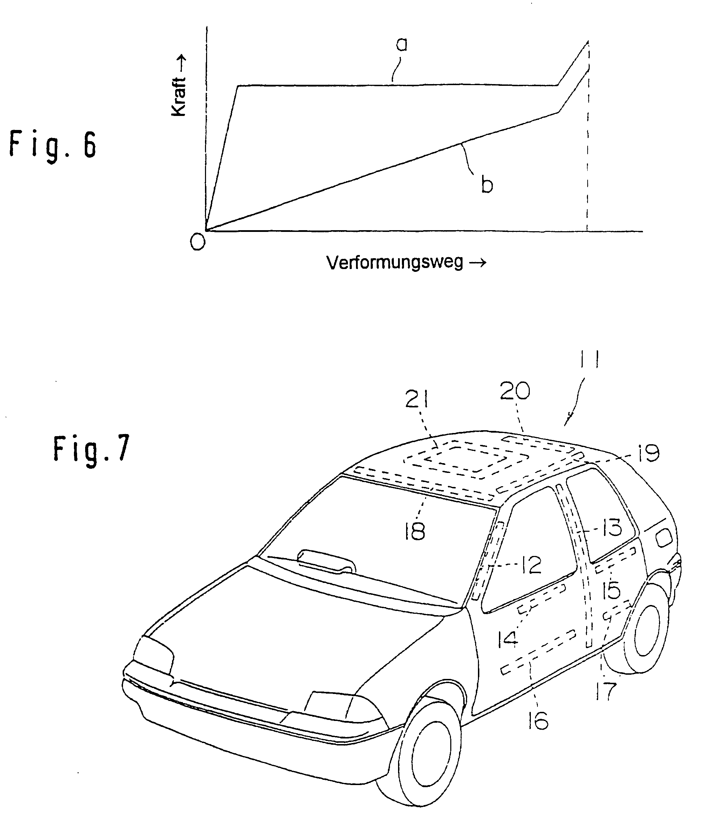

In Fig. 6 sind die Ergebnisse dieses Versuchs qualitativ dargestellt. Die Linie a stellt das Ergebnis für den Absorptionskörper 1 dar, während die Linie b für den als Vergleichsbeispiel verwendeten Absorptionskörper 10 gilt. Bei einer gleich hohen Kraft weist der rechteckige Absorptionskörper 1 in der Anfangsphase verglichen mit dem runden Absorptionskörper 10 eine geringere Verformung auf und absorbiert bereits in dieser Anfangsphase die durch Außenkraft aufgebrachte Energie in großem Umfang. Sobald die Kraft eine bestimmte Größe erreicht, nimmt die Verformung schnell zu. Im Gegensatz dazu weist der runde Absorptionskörper 10 eine weitgehend linear ansteigende Kennlinie der Abhängigkeit zwischen Last und Verformung auf, das heißt, er weist größere Verformungen bereits bei geringerer Last auf.

Im Rahmen dieser Versuche wurde für zwei verschiedene Typen des erfindungsgemäßen Absorptionskörpers diejenige Last ermittelt, die erforderlich ist, um die in Fig. 2 dargestellte Seitenlänge L auf Null zu reduzieren, d.h. den Absorptionskörper zumindest bereichsweise vollständig zusammenzudrücken. In der folgenden Tabelle sind die Abmessungen und verwendeten Materialien für die beiden Typen angegeben.

| Typ | Außenbreite [mm] | Form | Bestandteile | | | Wellenanzahl pro 100 mm Länge | Gewicht [g] pro 100 mm Länge |
|---|---|---|---|---|---|---|---|
| | | | Kraftpapier | Hartaluminium | Kraftpapier | | |
| 1 | 20 | quadratisch | t0.2 x W60 | t0.09 x W35 | t0.2 x W60 | 52 | 11.03 |
| 2 | 26 | ↑ | ↑ | t0.1 x W35 x 2 | ↑ | 52 | 23.49 |
| Anmerkung: t: Dicke [mm], W: Breite [mm] | | | | | | | |

Hier wurden für den Typ 1 eine Kraft von ca. 220 Kgf
(= 2,16 KN) und für den Typ 2 eine Kraft von ca. 460 Kgf
(= 4,51 KN) ermittelt, um den Absorptionskörper, wie beschrieben, vollständig zusammenzudrücken. Aus den Daten für das Gewicht der beiden Typen des erfindungsgemäßen Absorptionskörpers 1 wird ferner deutlich, daß dieser keine nennenswerte Erhöhung des Fahrzeuggewichts bewirkt.

Im Rahmen der beschriebenen Versuche wurde ferner herausgefunden, daß der Widerstand des Absorptionskörpers 1 gegen Verformung unter Last geändert werden kann, indem die Kanten abgerundet werden. Je größer hierbei der Rundungsradius ausgebildet wird, desto größer wird die Verformung unter einer aufgebrachten Last. Ferner können die Absorptionseigenschaften des Absorptionskörpers 1 durch Veränderung der Qualität, der Dicke und der Breite des verwendeten Materials und der Abstände zwischen den hervortretenden Stellen, also den Wellenbergen (vgl. Fig. 4) reguliert werden.

In Fig. 7 sind an einem Fahrzeug 11 diejenigen Stellen angedeutet, an denen der erfindungsgemäße Absorptionskörper 1 in vorteilhafter Weise angebracht werden kann, um bei einem Aufprall auf das Fahrzeug 11 die Energie zu absorbieren. Um mögliche Einbaupositionen für den Absorptionskörper handelt es sich beispielsweise bei der vorderen Strebe der Karosserie, also der A-Säule 12, der Mittelstrebe oder der B-Säule 13, den Schulterelementen 14, 15 in den Türen unmittelbar unterhalb der Fenster, um den Bereich etwa in der Mitte 16, 17 entlang der Höhe der Türbleche, um die Strebe 18 im vorderen Bereich des Daches, die Strebe 19 an den seitlichen Bereichen des Daches, um die Strebe 20 im hinteren Bereich des Daches und um die Umgebung 21 eines Schiebedaches. Insbesondere bei der Anbringung des erfindungsgemäßen Absorptionskörpers 1 an den genannten Stellen kann dieser seine vorteilhafte Wirkung für die Erhöhung der Sicherheit für die Passagiere im Innenraum des Fahrzeugs in vorteilhafter Weise entfalten.

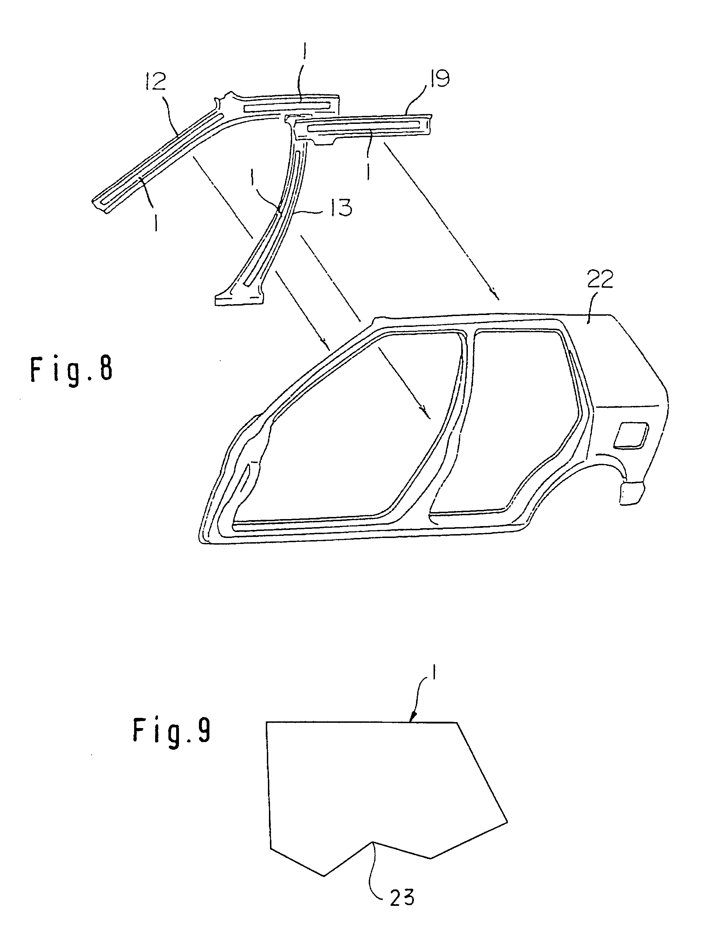

In Fig. 8 ist nochmals verdeutlicht, wie der erfindungsgemäße Absorptionskörper 1 an einzelnen Komponenten einer Fahrzeugkarosserie angebracht ist. Bei dem gezeigten Fall ist der Absorptionskörper 1 an zwei Stellen an einer Frontstrebenschiene 12 angebracht. Ferner ist der Absorptionskörper 1 an einem Bauteil 13 der B-Säule und einem Bauteil 19 an der Seite des Daches angebracht. Der Absorptionskörper 1 weist in dem gezeigten Fall eine rechteckige Form auf, und kann dadurch mittels eines Klebestoffs leicht und unmittelbar an der jeweiligen Wand aufgeklebt werden. Ferner ist der erfindungsgemäße Absorptionskörper 1 aus einem flexiblen Rohr derart biegsam und nachgiebig, daß er auch an gebogenen Stellen, wie beispielsweise an dem Bauteil 13, angebracht werden kann.

Nachdem der Absorptionskörper 1 jeweils an den genannten Stellen der Bauteile 12, 13, 19 angebracht ist, werden diese Bauteile 12, 13, 19 an dem seitlichen Karosserieteil 22, das ein Bestandteil der Außenwand des Fahrzeugs ist, angeschweißt. Folglich befindet sich im Zusammenbauzustand der gezeigten Bauteile einer Fahrzeugkarosserie der Absorptionskörper 1 jeweils zwischen der Außenwand und der Innenwand des Fahrzeugs, so daß bei einer Krafteinwirkung auf die Außenwand eine Verformung in dem Absorptionskörper 1 bewirkt wird, und die Stoßenergie bereits in diesem Bereich abgefangen wird. Insbesondere kann der Absorptionskörper 1, wie aus Fig. 6 hervorgeht, bereits bei vergleichsweise geringer Verformung eine hohe Kraft aufnehmen, so daß die Sicherheit der Passagiere eines Fahrzeugs erhöht wird. Es unterliegen nämlich sowohl der Absorptionskörper als auch die Bauteile an der Innenseite des Fahrzeugs in der Anfangsphase eines Aufpralls trotz bereits wesentlicher Energieabsorption keinen umfangreichen Verformungen.

In Fig. 9 ist eine spezielle Ausführungsform des erfindungsgemäßen Absorptionskörpers 1 in einem schematischen Querschnitt dargestellt. Hierbei ist zu erkennen, daß gemäß einer bevorzugten Ausführungsform der Erfindung die Wand des Absorptionskörpers 1 im Querschnitt derart verläuft, daß sie zur Ausbildung eines negativen Winkels 23 nach innen eingeknickt ist. Während zwischen den einzelnen, weitgehend gerade verlaufenden Wandabschnitten des Absorptionskörpers 1 an den übrigen Ecken des gezeigten Polygons ein (innen angetragener) Winkel zwischen 0° und höchstens 180° vorliegt, beträgt dieser (ebenfalls innen angetragene) Winkel an der Stelle 23 mehr als 180°, so daß dieser Winkel als negativer Winkel 23 bezeichnet wird. In dieser Ausführungsform kann der erfindungsgemäße Absorptionskörper 1 hinsichtlich seines Querschnitts besonders gut an die Form der umgebenden Bauteile sowie an die erforderlichen Orientierungen zur Absorption von Stoßenergie angepaßt werden.

Es sei noch angemerkt, daß sich der Absorptionskörper 1, obwohl in den Fig. 7 und 8 Zonen der Umgebung der Fahrgastzelle dargestellt sind, in denen der Absorptionskörper 1 angebracht werden kann, auch für die Anbringung in der Umgebung des Motorraumes eignet, um auch in diesem Bereich große Aufprallkräfte mit anfangs geringer Verformung aufzunehmen.

Im übrigen ergibt sich die in den Fig. 1 und 2 zu erkennende wendelförmige Verlauf der Rillen aus der Tatsache, daß es sich bei dem gezeigten Beispiel um ein Wickelrohr handelt. Ebenso können die Rillen und Erhebungen jeweils als an der Außenseite des Rohres umlaufende Kreise ausgebildet sein, wenn sich dies aus einem entsprechenden Herstellungsprozeß ergibt. Auch mit einer kreisförmigen Form der Erhebungen und Rillen kann für den erfindungsgemäßen Absorptionskörper 1 die erforderliche Flexibilität erreicht werden.

## Patentansprüche

1. Absorptionskörper für Stoßenergie zum Einbau in einem Karosserieteil, der durch ein flexibles Rohr gebildet ist,
**dadurch gekennzeichnet, dass**
- die Wand des Rohres mehrschichtig aufgebaut ist und zumindest eine Lage aus Metall und zumindest eine Lage aus Papier oder Kunststoff aufweist,
- die Absorptionskörper (1) bezüglich seines Querschnitts derart gestaltet ist, dass zumindest ein weitgehend gerade verlaufender Wandabschnitt ausgebildet ist, der im Einbauzustand des Absorptionskörpers (1) weitgehend parallel zur Richtung einer zu erwartenden Krafteinleitung ist, und
- der Absorptionskörper (1) derart verformbar ist, dass Stoßenergie aufnehmbar ist.

2. Absorptionskörper nach Anspruch 1, **dadurch gekennzeichnet, daß** dieser aus einem Wickelrohr besteht, das aus mehreren Bändern wendelförmig gewickelt ist und wendelförmig am Rohrumfang umlaufende Rillen aufweist.

3. Absorptionskörper nach Anspruch 2, **dadurch gekennzeichnet, daß** die Bänder mit seitlichen Überlappungen gewickelt sind.

4. Absorptionskörper nach zumindest einem der vorangehenden Ansprüche, **dadurch gekennzeichnet, daß** die Metallschicht aus Aluminium, einer Aluminiumlegierung oder Stahl besteht.

5. Absorptionskörper nach zumindest einem der vorangehenden Ansprüche, **dadurch gekennzeichnet, daß** dieser sowohl an der Innen- als auch an der Außenseite seiner Wand eine Lage aus Papier oder Kunststoff aufweist.

6. Absorptionskörper nach zumindest einem der vorangehenden Ansprüche, **dadurch gekennzeichnet, daß** dieser Schichten aus Metall in einer Anzahl aufweist, die durch zwei teilbar ist, wobei die Materialien von jeweils zwei aneinanderliegenden Schichten in beliebiger Kombination aus den Materialien Aluminium, einer Aluminiumlegierung und Stahl gewählt werden.

7. Absorptionskörper nach zumindest einem der vorangehenden Ansprüche, **dadurch gekennzeichnet, daß** die Richtung des weitgehend geraden Wandabschnitts im Einbauzustand des Absorptionskörpers (1) unter einem Winkel von nicht mehr als 15°, vorzugsweise nicht mehr als 5° zu der Richtung der zu erwartenden Krafteinleitung verläuft.

8. Absorptionskörper nach zumindest einem der vorangehenden Ansprüche, **dadurch gekennzeichnet, daß** der im Einbauzustand des Absorptionskörpers (1) weitgehend gerade verlaufende Wandabschnitt im Querschnitt gesehen in der Mitte seiner Länge in einem Ausmaß ausgebaucht ist, das nicht größer ist als ein Fünftel, vorzugsweise ein Zwanzigstel der Länge des Wandabschnitts.

9. Absorptionskörper nach zumindest einem der vorangehenden Ansprüche, **dadurch gekennzeichnet, daß** der Absorptionskörper (1) einen polygonalen Querschnitt aufweist, dessen Ecken abgerundet sind.

10. Absorptionskörper nach zumindest einem der vorangehenden Ansprüche, **dadurch gekennzeichnet, daß** der Querschnitt des Absorptionskörpers (1) symmetrisch, vorzugsweise quadratisch, rechteckig, rautenförmig, sechs- oder achteckig ist.

11. Absorptionskörper nach zumindest einem der Ansprüche 1 bis 9, **dadurch gekennzeichnet, daß** der Querschnitt des Absorptionskörpers (1) unsymmetrisch ist.

12. Absorptionskörper nach zumindest einem der vorangehenden Ansprüche, **dadurch gekennzeichnet, daß** dieser zumindest einen Wandabschnitt aufweist, der konkav oder konvex gekrümmt ausgebildet ist.

13. Absorptionskörper nach zumindest einem der vorangehenden Ansprüche, **dadurch gekennzeichnet, daß** dieser einen Querschnitt aufweist, in dessen Verlauf die Wand des Absorptionskörpers (1) an zumindest einer Stelle unter Ausbildung eines negativen Winkels (23) nach innen eingeknickt ist.

14. Verwendung eines flexiblen Rohres, dessen Wand mehrschichtig aufgebaut ist und zumindest eine Lage aus Metall und zumindest,eine Lage aus Papier oder Kunststoff aufweist, und dessen Querschnitt derart gestaltet ist, daß zumindest ein weitgehend gerade verlaufender Wandabschnitt ausgebildet ist, der im Einbauzustand des Rohres weitgehend parallel zur Richtung einer zu erwartenden Krafteinleitung ist, als Absorptionskörper für Stoßenergie.

15. Verwendung nach Anspruch 14, **dadurch gekennzeichnet, daß** die Richtung des weitgehend geraden Wandabschnitts unter einem Winkel von nicht mehr als 15°, vorzugsweise nicht mehr als 5° zu der Richtung der zu erwartenden Krafteinleitung verläuft.

16. Kombination eines Absorptionskörpers (1) nach zumindest einem der vorangehenden Ansprüche mit zumindest einem Bauteil einer Fahrzeugkarosserie (11), vorzugsweise einer Innen- (12, 13, 19) und einer Außenwand (22), an dem bzw. an denen der Absorptionskörper (1) derart befestigt ist, daß sein weitgehend gerade verlaufender Wandabschnitt im Einbauzustand des Absorptionskörpers (1) weitgehend parallel zur Richtung einer zu erwartenden Krafteinleitung verläuft.

17. Kombination nach Anspruch 16, **dadurch gekennzeichnet, daß** der Absorptionskörper (1) derart angebracht ist, daß ferner die Rohrlängsachse des Absorptionskörpers senkrecht zur Richtung der zu erwartenden Krafteinleitung verläuft.

## Claims

1. Impact energy absorption body for installation in a vehicle body part, which absorption body is formed by a flexible tube, **characterised in that**
- the wall of the tube is built up of a plurality of layers and has at least one layer of metal and at least one layer of paper or plastics,
- the absorption body (1) is configured as regards its cross-section so that at least one predominantly rectilinearly running wall section is formed that is predominantly parallel in the installed state of the absorption body (1) to the direction of an anticipated incident force, and
- the absorption body (1) can be deformed in such a way that impact energy can be absorbed.

2. Absorption body according to claim 1, **characterised in that** this consists of a laminated tube that is coiled in a helical manner from a plurality of strips and has grooves running in a helical manner on the circumference of the tube.

3. Absorption body according to claim 2, **characterised in that** the strips are coiled so as to have lateral overlappings.

4. Absorption body according to at least one of the preceding claims, **characterised in that** the metal layer consists of aluminium, an aluminium alloy or steel.

5. Absorption body according to at least one of the preceding claims, **characterised in that** this has both on the inside and outside of its wall a layer of paper or plastics.

6. Absorption body according to at least one of the preceding claims, **characterised in that** the number of these metal layers is divisible by two, wherein the materials of in each case two adjacent layers can be chosen in an arbitrary combination from the materials aluminium, an aluminium alloy and steel.

7. Absorption body according to at least one of the preceding claims, **characterised in that** the direction of the predominantly rectilinear wall section in the installed state of the absorption body (1) forms an angle of not more than 15°, preferably not more than 5°, with the direction of the expected incident force.

8. Absorption body according to at least one of the preceding claims, **characterised in that** the wall section running predominantly rectilinearly in the installed state of the absorption body (1) has, seen in cross-section, a bulge in the middle of its length that is not greater than one fifth, preferably one twentieth, of the length of the wall section.

9. Absorption body according to at least one of the preceding claims, **characterised in that** the absorption body (1) has a polygonal cross-section whose corners are rounded off.

10. Absorption body according to at least one of the preceding claims, **characterised in that** the cross-section of the absorption body (1) is symmetrical, preferably square, rectangular, rhomboidal, hexagonal or octagonal.

11. Absorption body according to at least one of claims 1 to 9, **characterised in that** the cross-section of the absorption body (1) is asymmetrical.

12. Absorption body according to at least one of the preceding claims, **characterised in that** this has at least one wall section that is curved in a concave or convex manner.

13. Absorption body according to at least one of the preceding claims, **characterised in that** this has a cross-section in which the wall of the absorption body (1) is bent inwardly at least at one point, with the formation of a negative angle (23).

14. Use of a flexible tube whose wall is composed of a plurality of layers and that has at least one layer of metal and at least one layer of paper or plastics, and whose cross-section is configured so that at least a predominantly rectilinearly running wall section is formed which, in the installed state of the tube, is predominantly parallel to the direction of an expected incident force, as absorption body for absorbing impact energy.

15. Use according to claim 14, **characterised in that** the direction of the predominantly rectilinear wall section forms an angle of not more than 15°, preferably not more than 5°, relative to the direction of the expected incident force.

16. Combination of an absorption body (1) according to at least one of the preceding claims together with at least one structural part of a vehicle body (11), preferably an inner wall (12, 13, 19) and an outer wall (22), on which wall or walls the absorption body (1) is secured in such a way that its predominantly rectilinearly running wall section in the installed state of the absorption body (1) runs predominantly parallel to the direction of an expected incident force.

17. Combination according to claim 16, **characterised in that** the absorption body (1) is installed in such a way that in addition the tubular longitudinal axis of the absorption body runs perpendicular to the direction of the expected incident force.

## Revendications

1. Corps absorbant pour énergie de choc pour montage dans une partie de la carrosserie, formé par un tube flexible,
**caractérisé par le fait**
- **que** la paroi du tube est constituée de plusieurs couches et présente au moins une couche de métal et au moins une couche de papier ou de plastique,
- **que** le corps absorbant (1) est, en ce qui concerne sa section, réalisé de façon qu'est formé au moins un tronçon de paroi d'allure largement rectiligne qui, à l'état monté du corps absorbant (1), soit largement parallèle à la direction d'une application d'une force à attendre, et
- **que** le corps absorbant (1) soit déformable de façon à pouvoir absorber une éncrgie de choc.

2. Corps absorbant selon la revendication 1, **caractérisé par le fait qu'**il est constitué d'un tube fabriqué par enroulement qui est enroulé en hélice àpartir de plusieurs bandes et présente des cannelures tournant en hélice sur, et autour de, la périphérie du tube.

3. Corps absorbant selon la revendication 2, **caractérisé par le fait que** les bandes sont enroulées avec recouvrements latéraux.

4. Corps absorbant selon au moins l'une des revendications précédentes, **caractérisé par le fait que** la couche de métal est constituée d'aluminium, d'un alliage d'aluminium ou d'acier.

5. Corps absorbant selon l'une des revendications précédentes,
**caractérisé par le fait qu'**aussi bien sur la face intérieure que sur la face extérieure de sa paroi il présente une couche de papier ou de plastique.

6. Corps absorbant selon au moins l'une des revendications précédentes, **caractérisé par le fait qu'**il présente des couches de métal dont le nombre est divisible par deux, les matériaux des deux couches situées l'une à côté de l'autre étant chaque fois choisis en une combinaison quelconque des matériaux aluminium, alliage d'aluminium et acier.

7. Corps absorbant selon au moins l'une des revendications précédentes, **caractérisé par le fait qu'**à l'état monté du corps absorbant (1) la direction du tronçon de paroi largement rectiligne fait avec la direction de l'application de la force à attendre un angle non supérieur à 15°, de préférence non supérieur à 5°.

8. Corps absorbant selon au moins l'une des revendications précédentes, **caractérisé par le fait que**, vu en coupe, le tronçon de paroi qui, à l'état monté du corps absorbant (1) a une allure largement rectiligne, présente, vers l'extérieur, au milieu de sa longueur, un bombement de dimension non supérieure au cinquième, de préférence au vingtième, de la longueur du tronçon de paroi.

9. Corps absorbant selon au moins l'une des revendications précédentes, **caractérisé par le fait que** le corps absorbant (1) présente une section polygonale dont les angles sont arrondis.

10. Corps absorbant selon au moins l'une des revendications précédentes, **caractérisé par le fait que** la section du corps absorbant (1) est symétrique, de préférence carrée, rectangulaire, en forme de losange, d'hexagone ou d'octogone.

11. Corps absorbant selon au moins l'une des revendications 1 à 9, **caractérisé par le fait que** la section du corps absorbant (1) est dissymétrique.

12. Corps absorbant selon au moins l'une des revendications précédentes, **caractérisé par le fait qu'**il présente au moins un tronçon de paroi incurvé, concave ou convexe.

13. Corps absorbant selon au moins l'une des revendications précédentes, **caractérisé par le fait qu'**il présente une section sur la périphérie de laquelle la paroi du corps absorbant (1) forme, en au moins un endroit, une brisure vers l'intérieur avec formation d'un angle négatif (23).

14. Emploi d'un tube flexible dont la paroi est constituée de plusieurs couches et présente au moins une couche de métal et au moins une couche de papier ou de plastique et dont la section est réalisée de façon que se forme au moins un tronçon de paroi d'allure largement rectiligne qui, à l'état monté du tube, soit largement parallèle à la direction de l'application d'une force à attendre, comme corps absorbant pour une énergie de choc.

15. Emploi selon la revendication 14, **caractérisé par le fait que** la direction du tronçon de paroi largement rectiligne fait avec la direction de l'application de la force à attendre un angle non supérieur à 15° de préférence non supérieur à 5°.

16. Association d'un corps absorbant (1) selon au moins l'une des revendications précédentes avec au moins un composant d'une carrosserie de véhicule (11), de préférence une paroi intérieure (12, 13, 19) et une paroi extérieure (22), à laquelle, ou auxquelles, le corps absorbant (1) est fixé de façon qu'à l'état monté du corps absorbant (1), son tronçon de paroi d'allure largement rectiligne soit largement parallèle à la direction de l'application d'une force à attendre.

17. Association selon la revendication 16, **caractérisée par le fait que** le corps absorbant (1) est rapporté de façon qu'en outre l'axe longitudinal du tube du corps absorbant soit perpendiculaire à la direction de l'application de la force à attendre.
